# EUROPEAN PATENT APPLICATION

(11) **EP 1 891 854 A1**
(43) Date of publication of application: **27.02.2008**
(21) Application number: 06119243.1
(22) Date of filing: 21.08.2006
(51) Int. Cl.: A01G 25/00

(54) **Process and composition for watering plants**

(71) Applicant: SHELL INTERNATIONALE RESEARCH MAATSCHAPPIJ B.V., 2596 HR Den Haag (NL)
(72) Inventor: Meurs, Jan Hermen Hendrik, 1031 CM Amsterdam (NL)
(74) Representative: Zeestraten, Albertus W. J.

(57) **Abstract**

The invention relates to a process for watering plants, comprising feeding a solution or suspension of polypropylene glycol in water to such plants. Further, the invention relates to a composition for watering plants, comprising a solution or suspension of polypropylene glycol in water. It has been shown that with such process and composition the quantity of water to be fed to plants for their growth is reduced.

## Description

The present invention relates to a process for watering plants and to a composition for watering plants.

WO 02/15687 A2 relates to a composition that provides soils, plants or both, with moisture. This composition comprises (A) an active ingredient which may be (I) a water soluble or dispersible polymer or (II) a surfactant or (III) a combination of (I) and (II), and (B) the balance carriers and other adjunct ingredients.

According to WO 02/15687 A2, the preferred carrier (B) is water. Preferred polymers (A)(I) are polyalkyleneoxy homopolymers and copolymers, such as polyethylene glycols (PEGs), i.e. poly(ethylene oxides) and EO/PO, EO/PO/EO and PO/EO/PO co-polymers ("EO" stands for ethylene oxide and "PO" stands for propylene oxide). The polyalkyleneoxy polymer has a molecular weight (Mw) greater than or equal to 10,000 grams per mole. The amount of polymer (A)(I) is preferably about 0.01% to about 20% of the composition.

According to WO 02/15687 A2, surfactant (A)(II) may be a nonionic surfactant, which may suitably be a copolymer of polyethylene oxide and polyalkylene oxides, having Mw less than 10,000 grams per mole. Preferred polyalkyleneoxy surfactants include EO/PO, EO/PO/EO and PO/EO/PO co-polymers. A preferred surfactant is 25R2 PLURONIC surfactant from BASF, which has a Mw of 3,100, 20% of which represents EO units. The amount of surfactant (A)(II) is preferably about 0.01% to about 5% of the composition.

Table II of WO 02/15687 A2 lists 4 compositions consisting of water and a polymer at a concentration ranging from 0.5 to 6.0 wt.%, wherein the polymer is PEG having an average Mw of about 200,000 daltons (g/mole). In Example 21 at page 12 a composition is used consisting of water and 1-2 wt.% of dissolved polymer, wherein the polymer is PEG having a Mw of 100,000. Under Comparative Example 3 it is mentioned that said Example 21 shows that the polymer solution retains water longer than traditional watering.

Dutch patent application NL-A 9402079 discloses a nutritional solution for growing in a hydroculture consisting of an aqueous solution of a water-soluble polymer. Examples of said polymer are poly(ethyleneoxide) and ethylene oxide-propylene oxide copolymer. The content of said polymer in the solution is comprised within the range of 0.0001 to 1.0, preferably 0.001 to 0.1 wt.%. Example 1, No. 9, Table A is an example of an aqueous poly(ethyleneoxide) solution. Molecular weights for the polyalkyleneoxy polymers are not disclosed in NL-A 9402079.

A disadvantage of using polyethylene glycol (PEG) is that it is relatively toxic to plants and humans. The molecular weight distribution is such that PEG contains certain quantities of ethylene glycol and diethylene glycol. Especially where the PEG has a relatively low (weight averaged) molecular weight, e.g. between 100 and 500 g/mole, the quantities of ethylene glycol and diethylene glycol are relatively large. It is generally known that ethylene glycol may cause respiratory tract irritation, skin irritation, eye irritation, central nervous system depression, nerve damage and kidney damage, whereas diethylene glycol may cause central nervous system depression and kidney damage. Therefore, plant watering compositions comprising such compound(s) should be carefully applied. On the other hand, an advantage of using polymers having a relatively low molecular weight, ranging e.g. between 100 and 500 g/mole is that they can be dissolved easily, e.g. in water. Further, it is generally known that PEG is to a relatively high extent water-soluble (hydrophilic), as the carbon backbone is relatively small as compared to the oxygen portion. This is presumably the reason that it has been shown in Example 21 of WO 02/15687 A2 that a PEG solution retains water relatively longer.

Therefore, a problem to be solved is providing a process and a composition for watering plants using a compound which does not have the above-mentioned disadvantages associated with the use of PEG. More in particular, the compound to be used should be relatively non-toxic to plants and humans. It has surprisingly been found that polypropylene glycol (PPG), i.e. poly(propyleneoxide), is a compound which can be used for watering plants and which does not have the above-mentioned disadvantages associated with the use of PEG. More specifically, with the present invention it is possible to effect large water savings.

PPG differs from PEG in that each monomer unit of PPG contains an additional methyl group. This makes that PPG is relatively water-insoluble (hydrophobic). As mentioned above, with reference to WO 02/15687 A2, PEG is capable of retaining water relatively long. Because of the more hydrophobic character of PPG, it would be expected that PPG retains water only to a relatively small degree. However, surprisingly, it was found that despite its hydrophobic character, PPG is capable of retaining water in the liquid phase relatively well thereby preventing the water from evaporating. As a consequence, less water is needed to achieve the same plant growth effect, as will be further demonstrated in Example 1 below. Without wishing to be bound by theory, it is thought that the mechanism by which the use of PPG results in a reduction of the quantity of water to be fed to the plants for their growth, is different from the mechanism according to which PEG has such effect.

Accordingly, the present invention provides a process for watering plants, comprising feeding a solution or suspension of polypropylene glycol in water to such plants. Further, the present invention relates to a composition for watering plants, comprising a solution or suspension of polypropylene glycol in water. Still further, the present invention relates to the use of polypropylene glycol as an agent for reducing the quantity of water to be fed to plants for their growth, and to polypropylene glycol for use as an agent for reducing the quantity of water to be fed to plants for their growth.

The PPG to be used in the present invention is preferably a homopolymer of propylene oxide (PO) monomer. However, copolymers of PO and one or more other alkylene oxides, such as EO, may also be used provided that the relative amount of PO is greater than 50 wt.% based on total polymer weight. For example, the PPG may contain up to 40 wt.% of EO monomer. However, preferably, the relative amount of EO in such PO/EO copolymer is below 20 wt.%.

The PPG to be used in the present invention may have been prepared in any way known from prior art. If the PPG is for example a PO homopolymer, it may have been prepared by a process comprising reacting propylene oxide with (mono)propylene glycol which functions as an initiator compound containing two active hydrogen atoms which can react with the propylene oxide. A base, such as potassium hydroxide (KOH), may be used as a catalyst in such ring-opening polymerisation reaction. Water is an alternative initiator. If a base catalyst has been used, the polymerisation product containing mixture is preferably neutralised (e.g. by using phosphoric acid) in order to remove the base catalyst.

PPG of any molecular weight may be used in the present invention. Preferably, the Mw of the PPG used is comprised within the range of 50 to 5,000 g/mole, more preferably 50 to 3,000 g/mole and most preferably 50-1,000 g/mole. Even more preferably, the Mw of the PPG used is comprised within the range of 100-500 g/mole, more preferably 100-300 g/mole and most preferably 150-250 g/mole. Especially where the PPG has a relatively low (weight averaged) molecular weight, e.g. between 100 and 500 g/mole, the molecular weight distribution is such that the quantities of propylene glycol and dipropylene glycol are relatively large. It is generally known that propylene glycol and dipropylene glycol, unlike e.g. ethylene glycol and diethylene glycol, cause no significant health hazards.

In the process of the present invention, the aqueous solution or suspension preferably comprises 0.001 to 5.0 wt.% of polypropylene glycol, more preferably 0.01 to 2.0 wt.% and most preferably 0.01 to 1.0 wt.%.

In accordance with the invention, PPG is used to reduce the quantity of water to be fed to plants for their growth. "Plants" within the meaning in accordance with this invention also comprise seeds which may germinate into plants. Further, both cut plants (such as cut flowers and Christmas trees) and uncut plants which are still placed in soil, can be treated in accordance with the present invention. The aqueous, PPG containing solution or suspension may be fed or administered to the plants in a variety of ways. For example, said solution or suspension may be sprayed onto the leafs of the plants. Preferably, said solution or suspension is used to water the soil around the plant or the soil containing the plant seeds. Alternatively, where cut plants are concerned, these plants may be placed in a vase or tray containing said solution or suspension. In general, the PPG may be mixed with water just prior to feeding thereof to the plants.

Where for example cut flowers and Christmas trees are treated in accordance with the present invention, a reduction of dry-out and reduced loss of needles can be effected, as compared to the situation where a similar amount of water, but containing no PPG, is used.

The invention is further illustrated by the following Example.

### Example 1

Ten boxes were filled with porous stones (aqua culture) and culture soil. Then, in each box 30 grass seeds were placed. Finally, each box was covered with clean sand in such way that a regular surface was created. During the experiment, five boxes were watered with an aqueous solution comprising 0.1 wt.% of PPG having a Mw of about 200 g/mole (hereinafter "PPG boxes"). The PPG has been prepared by anionic ring-opening polymerisation of propylene oxide using KOH as the catalyst and propylene glycol as the initiator. The PPG produced in this way was then neutralised with phosphoric acid without any additional workup. The other five grass seeds containing boxes received only water, that is to say containing no PPG (hereinafter "reference boxes").

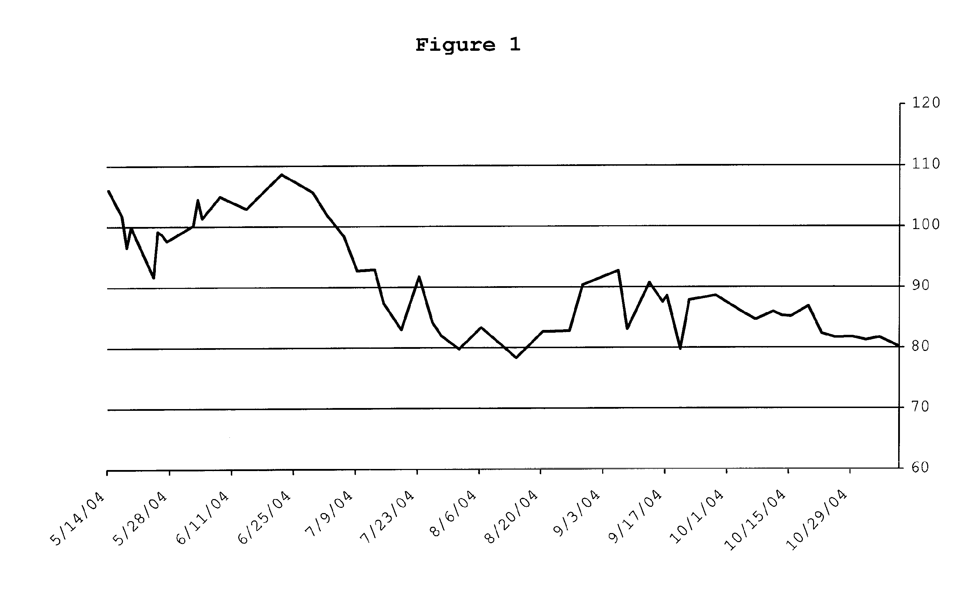

At some points of time, said PPG solution or water was added to each box in such quantity until the box had a specific weight. The quantity of PPG solution or water necessary to come to said specific weight for each box was recorded. All administered quantities of PPG solution for the PPG boxes were added up, just like the administered quantities of water for the reference boxes. This sum for the PPG boxes was divided by the sum for the reference boxes, and the result was multiplied with 100%. The obtained value, being a measure for the relative water addition quantity, indicates whether the PPG boxes needed more water (in case said value > 100%) or less water (in case said value < 100%) than the reference boxes. Said relative water addition quantities are shown in Table 1, as well as the day to which each relative water addition quantity relates (see also Fig. 1).

The experiment was carried out during the period starting from 13 May up until 8 November 2004. The grass seeds were placed in the boxes on 13 May 2004. 98% of all grass seeds developed into grass plants. The grass seeds in the PPG boxes and the grass seeds in the reference boxes all developed equally well. At the end of the experiment, the grass plants in the PPG boxes and the grass plants in the reference boxes had grown to the same extent. Therefore, a relative water addition quantity < 100% is indicative of the PPG solution being able to retain water in the liquid phase and preventing the water from evaporating. This is advantageous as in such case less water was actually needed for achieving the same growth effect.

**Table 1**

| Day | Relative water addition quantity |
|---|---|
| 14 May 2004 | 106.03 |
| 17 May 2004 | 101.77 |
| 18 May 2004 | 96.53 |
| 19 May 2004 | 99.92 |
| 24 May 2004 | 91.72 |
| 25 May 2004 | 99.18 |
| 26 May 2004 | 98.64 |
| 27 May 2004 | 97.62 |
| 2 June 2004 | 100.18 |
| 3 June 2004 | 104.48 |
| 4 June 2004 | 101.38 |
| 8 June 2004 | 104.91 |
| 14 June 2004 | 102.91 |
| 22 June 2004 | 108.64 |
| 29 June 2004 | 105.60 |
| 2 July 2004 | 102.07 |
| 6 July 2004 | 98.39 |
| 9 July 2004 | 92.70 |
| 13 July 2004 | 92.90 |
| 15 July 2004 | 87.35 |
| 19 July 2004 | 82.98 |
| 23 July 2004 | 91.71 |
| 26 July 2004 | 84.18 |
| 28 July 2004 | 81.97 |
| 1 August 2004 | 79.79 |
| 6 August 2004 | 83.36 |
| 14 August 2004 | 78.32 |
| 20 August 2004 | 82.65 |
| 26 August 2004 | 82.76 |
| 29 August 2004 | 90.36 |
| 6 September 2004 | 92.68 |
| 8 September 2004 | 83.06 |
| 13 September 2004 | 90.71 |
| 16 September 2004 | 87.52 |
| 17 September 2004 | 88.58 |
| 20 September 2004 | 79.77 |
| 22 September 2004 | 87.85 |
| 28 September 2004 | 88.61 |
| 4 October 2004 | 85.86 |
| 7 October 2004 | 84.65 |
| 11 October 2004 | 85.94 |
| 13 October 2004 | 85.28 |
| 15 October 2004 | 85.15 |
| 19 October 2004 | 86.84 |
| 22 October 2004 | 82.36 |
| 25 October 2004 | 81.71 |
| 29 October 2004 | 81.76 |
| 1 November 2004 | 81.27 |
| 4 November 2004 | 81.71 |
| 8 November 2004 | 80.34 |

The results of the experiment are graphically shown in the chart of Fig. 1. The following can be concluded from Table 1 and Fig. 1.

During the entire period of the experiment, the average relative water addition quantity for the PPG boxes was about 91%. This means that overall, about 9% less water was needed to achieve the same growth effect when using the PPG solution rather than solely water.

Further, in the first start-up period, the water addition quantity for the PPG boxes was almost equal to that for the reference boxes. The average relative water addition quantity in the period from 14 May up until 2 July 2004 was about 101%. This initial period corresponded to the period of germination of the grass seeds and early growth phase of the grass plants.

However, in the beginning of the final period, the relative water addition quantity for the PPG boxes started to decrease significantly. The average relative water addition quantity in the period from 6 July up until 8 November 2004 was about 86%. Thus, during this late growth phase of the grass plants, water savings of at least 14% were obtained when using the PPG solution, as compared to the boxes of grass plants which received only water.

## Claims

1. Process for watering plants, comprising feeding a solution or suspension of polypropylene glycol in water to such plants.

2. Process according to claim 1, wherein the molecular weight of the polypropylene glycol is comprised within the range of 50 to 5,000 g/mole, preferably 50 to 3,000 g/mole and more preferably 50-1,000 g/mole.

3. Process according to claim 1, wherein the molecular weight of the polypropylene glycol is comprised within the range of 100-500 g/mole, preferably 100-300 g/mole and more preferably 150-250 g/mole.

4. Composition for watering plants, comprising a solution or suspension of polypropylene glycol in water.

5. Composition according to claim 4, wherein the molecular weight of the polypropylene glycol is comprised within the range of 50 to 5,000 g/mole, preferably 50 to 3,000 g/mole and more preferably 50-1,000 g/mole.

6. Composition according to claim 4, wherein the molecular weight of the polypropylene glycol is comprised within the range of 100-500 g/mole, preferably 100-300 g/mole and more preferably 150-250 g/mole.

7. Use of polypropylene glycol as an agent for reducing the quantity of water to be fed to plants for their growth.

8. Use according to claim 7, wherein the molecular weight of the polypropylene glycol is comprised within the range of 50 to 5,000 g/mole, preferably 50 to 3,000 g/mole and more preferably 50-1,000 g/mole.

9. Use according to claim 7, wherein the molecular weight of the polypropylene glycol is comprised within the range of 100-500 g/mole, preferably 100-300 g/mole and more preferably 150-250 g/mole.

10. Polypropylene glycol for use as an agent for reducing the quantity of water to be fed to plants for their growth.
